(19) Europäisches Patentamt
European Patent Office
Office européen des brevets

(11) **EP 2 805 193 B1**

(12) **FASCICULE DE BREVET EUROPEEN**

(45) Date de publication et mention
de la délivrance du brevet:
**29.03.2017 Bulletin 2017/13**

(21) Numéro de dépôt: **13704166.1**

(22) Date de dépôt: **16.01.2013**

(51) Int Cl.:
*G02B 6/30* (2006.01)  *G02B 6/12* (2006.01)
*G02B 6/26* (2006.01)  *G02B 6/125* (2006.01)
*G02B 6/122* (2006.01)  *G02B 6/126* (2006.01)

(86) Numéro de dépôt international:
**PCT/FR2013/050101**

(87) Numéro de publication internationale:
**WO 2013/107984 (25.07.2013 Gazette 2013/30)**

(54) **CIRCUIT OPTIQUE INTEGRE A ZONE D'ATTENUATION TRAVERSANTE**

INTEGRIERTE OPTISCHE SCHALTUNG MIT DURCHGEHENDER ABSCHWÄCHUNGSZONE

INTEGRATED OPTICAL CIRCUIT WITH TRAVERSING ATTENTUATION ZONE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.01.2012 FR 1250549**

(43) Date de publication de la demande:
**26.11.2014 Bulletin 2014/48**

(73) Titulaire: **IXBLUE
78100 Saint-Germain-en-Laye (FR)**

(72) Inventeurs:
• **LEFEVRE, Hervé Claude
75007 Paris (FR)**
• **GUATTARI, Frédéric
93300 Aubervilliers (FR)**

(74) Mandataire: **Jacobacci Coralis Harle
14-16, rue Ballu
75009 Paris (FR)**

(56) Documents cités:
**EP-A1- 0 806 685    EP-A1- 1 111 413
EP-A1- 1 396 741    US-A- 5 475 772
US-A1- 2006 110 089    US-A1- 2009 087 133
US-A1- 2009 190 876**

Remarques:
Le dossier contient des informations techniques
présentées postérieurement au dépôt de la demande
et ne figurant pas dans le présent fascicule.

**Description**

La présente invention concerne un circuit optique intégré (Integrated Optic Circuit) comprenant un substrat généralement planaire et au moins un guide d'onde optique. Plus précisément, l'invention concerne un circuit optique intégré comprenant des moyens pour atténuer la propagation d'ondes optiques parasites via le substrat.

La fabrication de circuits optiques intégrés repose sur l'utilisation de techniques de microlithographie qui permettent une production en série. Un guide d'onde optique monomode peut être fabriqué sur un substrat planaire par des étapes de masquage et dépôt d'une bande étroite de matériau éventuellement suivies par une étape de diffusion thermique. Dans un circuit optique intégré, comme dans une fibre optique, l'effet de guidage optique est lié à une différence d'indice de réfraction entre le guide d'onde optique et le substrat, l'indice de réfraction du guide d'onde étant supérieur à celui du substrat. Différents matériaux peuvent être utilisés pour la fabrication de circuits optiques intégrés, tels que les semiconducteurs III-V, la silice sur silicium, le verre ou encore le niobate de lithium ($LiNbO_3$) ou le tantalate de lithium ($LiTaO_3$). Le tantalate de lithium et le niobate de lithium sont des matériaux particulièrement intéressants car ils présentent un effet électro-optique de Pockels. En disposant des électrodes de part et d'autre du guide d'onde intégré, il est possible de moduler l'indice du guide d'onde et ainsi de moduler la phase d'un signal optique se propageant dans le guide d'onde. Dans un circuit optique intégré où les électrodes sont séparées d'une dizaine de microns, l'application d'une tension de seulement quelques volts suffit pour générer un champ électrique et induire la modulation de phase souhaitée. Par comparaison, dans un modulateur de phase en optique classique, les électrodes étant séparées d'au moins un millimètre, la tension électrique nécessaire pour générer un même champ électrique entre les électrodes est de plusieurs centaines de volt.

Différentes technologies de fabrication de circuit optiques intégrés sur niobate de lithium ont été développées, tout d'abord la technique de diffusion de titane (Ti) puis la technique d'échange protonique. La technique de diffusion de titane consiste à déposer une bande de titane sur la surface d'un substrat de niobate de lithium, puis à chauffer le substrat de manière à ce que le titane diffuse dans le substrat et augmente localement l'indice de réfraction. La technique de diffusion de titane requiert une température élevée (900 à 1100 °C). La technique d'échange protonique consiste à placer un cristal biréfringent de $LiNbO_3$ dans un bain d'acide afin de remplacer des ions Li+ par des ions H+ (i.e. des protons). La technique d'échange protonique s'effectue à plus basse température que la diffusion de titane. De plus, la technique d'échange protonique sur un cristal biréfringent de $LiNbO_3$ a pour effet à la fois d'augmenter l'indice extraordinaire du cristal, ce qui crée du guidage pour une polarisation selon l'axe extraordinaire, et de réduire l'indice ordinaire du cristal, si bien qu'une polarisation selon l'axe ordinaire n'est pas guidée. Dans les circuits $LiNbO_3$ par échange protonique, la configuration habituelle est une coupe X, l'axe X du cristal biréfringent uniaxe de $LiNbO_3$ étant perpendiculaire à la surface du substrat, tandis que les axes Y et Z du cristal sont parallèles à la surface. L'axe de propagation du guide d'onde est parallèle à la direction Y, et le mode TE (transverse électrique, i.e. champ électrique parallèle à la surface du substrat) est parallèle à la direction Z. Dans ce cas, le guide d'onde optique par échange protonique ne guide que l'état de polarisation TE, l'état de polarisation croisée TM (transverse magnétique, i.e. champ magnétique parallèle à la surface du substrat et donc champ électrique perpendiculaire à la surface du substrat) se propageant librement dans le substrat. La technique d'échange protonique sur niobate de lithium permet ainsi de fabriquer un polariseur sur circuit optique intégré.

De nombreux circuits optiques intégrés sont ainsi fabriqués à partir de niobate de lithium : polariseur, modulateur de phase, interféromètre de Mach-Zehnder, jonction Y, coupleurs 2x2 ou encore coupleur 3x3. Avantageusement, un même circuit optique intègre plusieurs fonctions sur un même substrat, ce qui permet d'améliorer la compacité et de réduire les connexions optiques. Les circuits optiques intégrés par échange protonique sur niobate de lithium trouvent des applications notamment dans les gyroscopes à fibre optique.

Dans un circuit optique intégré, un faisceau d'entrée est généralement couplé à une extrémité d'un guide d'onde optique par l'intermédiaire d'une fibre optique. Toutefois, seuls certains modes (par exemple de polarisation) sont guidés par le guide d'onde, les autres modes se propageant librement dans le substrat. De plus, si le coeur de la fibre n'est pas parfaitement aligné avec le guide d'onde du circuit optique intégré, une partie du faisceau lumineux incident peut être couplée dans le substrat et se propager à l'extérieur du guide d'onde. Une partie de la lumière non guidée par le guide d'onde peut être réfléchie par réflexion interne totale sur une ou plusieurs faces du substrat. *In fine*, une partie de cette lumière non guidée peut être couplée à une fibre optique de sortie face à une autre extrémité du guide d'onde. La lumière non guidée peut ainsi perturber le fonctionnement d'un circuit optique intégré. Par exemple, dans le cas d'un polariseur à échange de protons sur niobate de lithium, le taux réjection en polarisation peut être affecté par le couplage de lumière transmise par le substrat de manière non guidée. De même, dans le cas d'un coupleur 2x2 ou 3x3, la lumière non guidée peut être couplée via le substrat d'une entrée vers une sortie du circuit optique intégré.

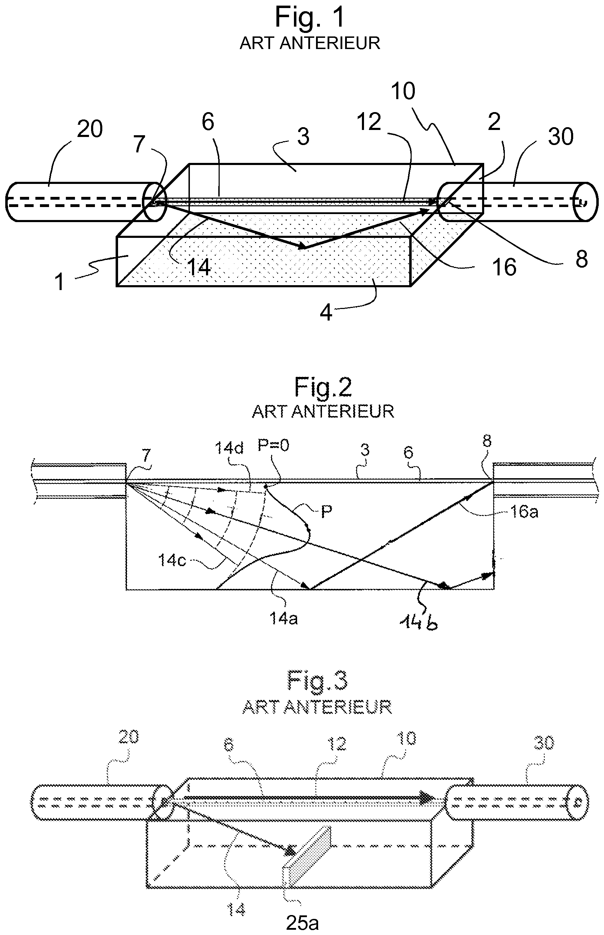

La Figure 1 représente schématiquement une vue en perspective d'un circuit optique intégré selon l'art antérieur. Le circuit optique intégré comprend un substrat 10 planaire. Par convention dans le présent exposé, le substrat 10 comprend une face d'entrée 1, une face de sortie 2, une face inférieure 4, une face supérieure 3 et deux faces latérales 5. La face inférieure 4 et la face supérieure 3 s'étendent entre la face d'entrée 1 et la face de sortie 2. La face inférieure 4 et la face supérieure 3 sont opposées l'une à l'autre. De préférence, la face inférieure 4 et la face supérieure 3 sont planes et parallèles. De même, les faces latérales 5 sont planes et parallèles entre elles et s'étendent entre la face d'entrée 1 et la face de sortie 2. Les faces d'entrée 1 et de sortie 2 du substrat peuvent aussi être planes et polies, mais sont de préférence taillées avec un angle d'inclinaison pour éviter les réflexions parasites entre les extrémités du guide d'onde. Le substrat 10 comprend un guide d'onde optique 6 rectiligne qui s'étend entre une première extrémité 7 sur la face d'entrée 1 et une deuxième extrémité 8 sur la face de sortie 2. Par convention, le guide d'onde 6 est plus proche de la face supérieure 3 que de la face inférieure 4. Selon un mode de réalisation préféré, le guide d'onde optique 6 est situé en dessous de la face supérieure 3 du substrat et s'étend dans un plan parallèle à la face supérieure 3. Le guide d'onde optique 6 peut être délimité par la face supérieure ou être enterré juste en dessous de cette face supérieure. Dans d'autres modes de réalisation, le guide d'onde 6 peut être déposé sur la surface supérieure 3 ou encore s'étendre à l'intérieur du substrat, par exemple dans un plan parallèle à la surface supérieure 3, à mi-distance entre la face inférieure 4 et à la face supérieure 3. Une fibre optique d'entrée 20 et une fibre optique de sortie 30 sont couplées optiquement à la première extrémité 7 et respectivement à la deuxième extrémité 8 du guide d'onde 6. La fibre optique d'entrée 20 transmet un faisceau optique dans le circuit optique intégré. Une partie du faisceau optique est guidée par le guide d'onde. Le faisceau guidé 12 se propage jusqu'à l'extrémité 8 du guide d'onde 6 face à la fibre de sortie 30. Du fait d'une désadaptation de mode entre le coeur de la fibre optique 20 et le guide d'onde intégré 6, une autre partie du faisceau n'est pas couplée dans le guide d'onde et se propage librement dans le substrat 10. Un faisceau non guidé 14 se propage alors dans le substrat jusqu'à la face inférieure 4 du substrat. Une partie du faisceau non guidé 14 peut être réfléchie par réflexion interne totale sur la face inférieure 4. Une partie du faisceau réfléchi 16 peut alors être transmise jusqu'à l'extrémité du substrat face à la fibre de sortie 30. La fibre de sortie 30 peut ainsi collecter non seulement le faisceau optique guidé 12, mais aussi une partie du faisceau optique non guidé et réfléchi 16. La figure 1 représente uniquement une réflexion unique sur la face inférieure 4 du substrat, à mi-distance entre la face d'entrée 1 et la face de sortie 2, c'est-à-dire au centre de la face inférieure 4. D'autres réflexions internes multiples sont également possibles.

La figure 2 représente une vue en coupe du circuit optique intégré de la figure 1 sur laquelle on a représenté schématiquement la répartition angulaire de la puissance lumineuse du faisceau optique non guidé dans le substrat. On observe qu'une partie assez élevée du faisceau optique est couplée optiquement dans le substrat. L'onde optique non guidée subit une réflexion interne totale sur la surface supérieure 3. De ce fait, l'onde optique non guidée est soumise à un effet interférométrique du type miroir de Lloyd sur la face supérieure 3 du substrat. Ceci conduit à un interféromètre à miroir de Lloyd, des interférences se produisant entre la fibre d'entrée 20 et son image virtuelle. Or la réflexion interne totale produit un déphasage de π. Par conséquent, la frange centrale de l'interférogramme, située sur la face supérieure 3 est une frange noire. Ceci explique que la densité de puissance de la lumière non guidée se propageant en direct soit drastiquement réduite juste en dessous de la face supérieure 3, où est placée la fibre optique de sortie (cf. H. Lefèvre, The fiber optic gyroscope, Artech House, 1992, Annex 3 Basics of Integrated Optics, pp. 273-284). Par conséquent, un polariseur à échange de protons devrait présenter un taux de polarisation très élevé de -80 à -90 dB en théorie.

Cependant, il existe d'autres couplages du faisceau optique non guidé que la transmission directe. En effet, le substrat peut transmettre différents faisceaux non guidés se propageant par réflexion interne notamment sur la face inférieure 4, mais aussi sur la face supérieure 3 ou encore sur les faces latérales 5. Des faisceaux parasites non guidés se propageant par réflexion interne sur les faces du substrat peuvent parvenir à proximité d'une extrémité 8 de guide d'onde sur la face de sortie 2 du substrat.

De manière générale, les faisceaux non guidés réfléchis à l'intérieur du substrat peuvent affecter la qualité des signaux transmis dans le guide d'onde d'un circuit optique intégré. Dans le cas d'un polariseur à échange protonique sur niobate de lithium, coupé suivant un plan X et comprenant un guide d'onde intégré suivant l'axe de propagation Y, le faisceau guidé 12 est généralement un faisceau de polarisation TE et le faisceau non guidé 14 est un faisceau de polarisation TM. Du fait des réflexions internes de lumière non guidée dans le substrat, le taux de réjection en polarisation d'un polariseur à échange protonique selon le schéma de la figure 1 est en pratique limité à environ -50 dB. Or, la qualité d'un polariseur intégré influence les performances de certaines applications, notamment dans un gyroscope à fibre optique. Il est donc nécessaire d'améliorer le taux de réjection d'un polariseur à guide d'onde intégré. De manière plus générale, il est souhaitable d'améliorer la qualité optique d'un circuit optique intégré et de réduire la quantité de lumière parasite non guidée transmise par le substrat en dehors du guide d'onde optique.

Différentes solutions ont été proposées pour résoudre le problème de couplage parasite de faisceaux optiques non guidés entre une entrée de guide d'onde et une sortie de guide d'onde dans un circuit optique intégré.

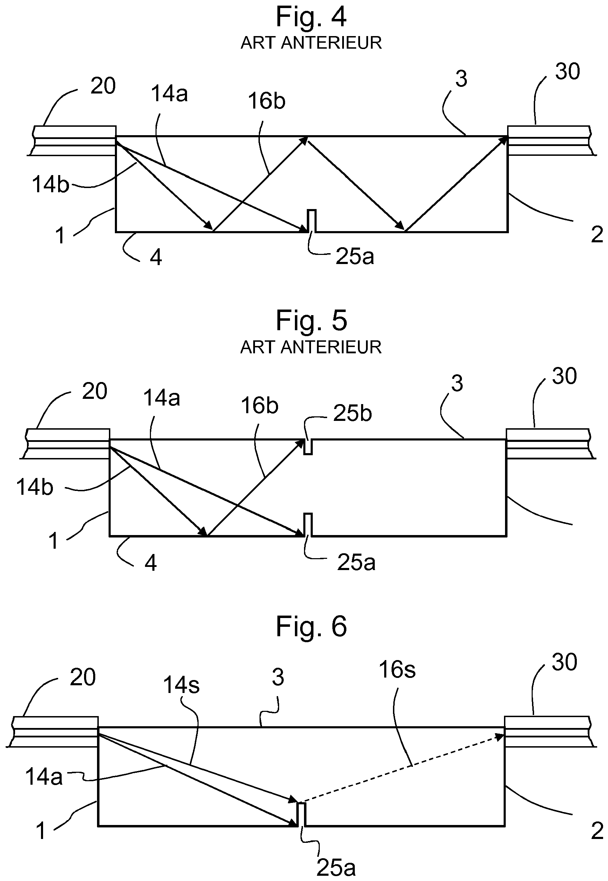

Il est généralement admis que la principale contribution à la lumière parasite provient de la réflexion primaire d'un faisceau non guidé sur le centre de la face inférieure 4 entre une première extrémité 7 de guide d'onde sur la face d'entrée 1 et une seconde extrémité 8 de guide d'onde sur la face de sortie 2. Afin de supprimer la réflexion primaire sur la face inférieure d'un substrat 4, on a développé un circuit optique intégré comprenant une rainure centrale 25a disposée au milieu de la face inférieure 4 (cf. Figure 3). La rainure centrale 25a s'étend sur toute la largeur du substrat selon une direction perpendiculaire à la direction du guide d'onde 6. Toutefois, si une rainure centrale 25a arrête le faisceau non guidé 14a se réfléchissant au centre de la face inférieure 4 du substrat, elle n'arrête pas les réflexions internes multiples se produisant entre la face inférieure 4 et la face supérieure 3. La figure 4 représente un exemple d'une partie de faisceau optique non guidé 14b se propageant entre une première extrémité de guide d'onde 7 et une seconde extrémité 8 de guide d'onde, par double réflexion sur la face inférieure et simple réflexion sur la face supérieure pour former un faisceau parasite 16b de réflexion multiple. De ce fait, une rainure centrale sur la face inférieure du substrat permet d'améliorer le taux de réjection d'un polariseur à échange protonique de plusieurs ordres de grandeur, mais le taux de réjection reste limité en pratique à environ -65 dB.

Le document EP1111413 décrit un COI comprenant au moins une rainure centrale s'étendant sur plus de 70% de l'épaisseur du substrat et un couvercle pour renforcer la structure de manière à éviter une cassure du COI au niveau de la rainure centrale.

Dans le cas d'une jonction Y, le brevet US #7,366,372 propose de disposer une première rainure centrale 25a sur la face inférieure du circuit optique intégré à mi-distance entre la face d'entrée 1 et la face de sortie 2, afin de supprimer la réflexion primaire, et une deuxième rainure centrale 25b sur la face supérieure, disposée entre les branches de la jonction Y, et à mi-distance entre la face d'entrée et la face de sortie, afin de supprimer la partie du faisceau non guidé 14b se propageant par réflexion multiple dans le substrat et se réfléchissant sur le milieu de la face supérieure (voir figure 5 en vue de coupe). Toutefois, la rainure centrale 25b sur la face supérieure 3 ne doit pas couper le guide d'onde 6 et est donc limitée latéralement pour ne pas couper les branches de la jonction Y. Cette solution n'est pas généralisable à d'autres types de circuits intégrés optiques.

Le document EP1396741 décrit un COI comprenant un guide d'onde formé dans une couche mince prise en sandwich entre deux couches de confinement, la structure à trois couches étant intégrée sur un substrat. Le document EP1396741 décrit aussi une rainure s'étendant sur l'épaisseur des trois couches et s'approchant le plus près possible du guide d'onde pour absorber la lumière parasite.

L'invention vise à proposer une solution alternative ou complémentaire à la formation d'une rainure centrale absorbante sur la face inférieure d'un circuit intégré optique. Plus précisément, un des buts de l'invention est de proposer un circuit optique intégré à la fois robuste et permettant de réduire le taux de transmission de lumière parasite non guidée dans le substrat. Un autre but de l'invention est de réduire le taux de couplage parasite (cross-coupling) entre ports d'entrées et ports de sortie, dans un circuit intégré optique ayant plusieurs ports d'entrée et/ou plusieurs ports de sortie.

La présente invention a pour but de remédier aux inconvénients des dispositifs antérieurs et concerne plus particulièrement un circuit optique intégré selon la revendication 1.

Selon un mode de réalisation préféré de l'invention :

- ladite au moins une zone d'atténuation optique comprend au moins un trou traversant s'étendant de la face inférieure jusqu'à la face supérieure du substrat ;
- ledit au moins un trou traversant est rempli par un matériau optiquement absorbant ou opaque ou par un matériau réfléchissant.

Selon un mode de réalisation particulier de l'invention, ladite au moins une zone d'atténuation est positionnée au milieu dudit segment de droite joignant une première extrémité du guide d'onde sur la face d'entrée du circuit optique intégré et une deuxième extrémité du guide d'onde sur la face de sortie du circuit optique intégré.

Selon un aspect préféré d'un mode de réalisation de l'invention, le guide d'onde est apte à guider un faisceau optique ayant un premier état de polarisation déterminé, dit guidé, et à transmettre dans le substrat un faisceau optique non guidé ayant un second état de polarisation.

Selon un aspect préféré d'un mode de réalisation de l'invention, le substrat est constitué d'un matériau choisi parmi $LiNbO_3$ et $LiTaO_3$.

Selon un mode de réalisation particulier de l'invention, le COI comporte en outre au moins une rainure sur la face inférieure du circuit optique intégré, une rainure sur la face supérieure du circuit optique intégré, et/ou une rainure sur une face latérale du circuit optique intégré.

Selon un mode de réalisation particulier, ledit au moins un guide d'onde optique comprend une branche commune, une première branche secondaire et une deuxième branche secondaire, la branche commune étant reliée par une jonction Y à la première branche secondaire et à la deuxième branche secondaire et ladite au moins une zone d'atténuation est disposée sur un premier segment de droite joignant la première extrémité de la branche commune sur la face d'entrée à la deuxième extrémité de la première branche secondaire sur la face de sortie et/ou sur un deuxième segment de droite joignant la première extrémité de la branche commune sur la face d'entrée à la deuxième extrémité de la deuxième branche secondaire sur la face de sortie.

Selon un aspect de ce mode de réalisation particulier, ladite au moins une zone d'atténuation comprend au moins une première zone d'atténuation et au moins une deuxième zone d'atténuation, ladite première zone d'atténuation étant disposée sur un premier segment de droite joignant la première extrémité de la branche commune sur la face d'entrée à la deuxième extrémité de la première branche secondaire sur la face de sortie et ladite deuxième zone d'atténuation étant disposée sur un deuxième segment de droite joignant la première extrémité de la branche commune sur la face d'entrée à la deuxième extrémité de la deuxième branche secondaire sur la face de sortie.

Selon un autre aspect de ce mode de réalisation particulier, la première zone d'atténuation et la deuxième zone d'atténuation sont disposées respectivement de part et d'autre de la branche commune de la jonction Y.

Selon un mode de réalisation particulier de l'invention, ledit substrat comprend N guides d'onde optiques, avec N entier supérieur ou égal à deux, ayant au moins N extrémités de guide d'onde sur la face d'entrée et/ou au moins N extrémités de guide d'onde sur la face de sortie et ladite au moins une zone d'atténuation comprend au moins N zones d'atténuations distinctes, chaque zone d'atténuation distincte étant disposée sur un segment de droite joignant une extrémité de guide d'onde sur la face d'entrée et une extrémité de guide d'onde sur la face de sortie.

Selon un mode de réalisation particulier de l'invention, ledit substrat comprend au moins une zone d'atténuation supplémentaire s'étendant à l'intérieur du substrat depuis la face inférieure jusqu'à la face supérieure du substrat, ladite au moins une zone d'atténuation supplémentaire étant positionnée de manière à atténuer un faisceau optique non guidé suivant un chemin optique comprenant une réflexion sur une face latérale et une réflexion sur la face inférieure entre ladite première extrémité de guide d'onde et ladite seconde extrémité de guide d'onde.

L'invention trouvera une application particulièrement avantageuse dans un polariseur à échange protonique sur substrat de niobate de lithium.

La présente invention concerne également les caractéristiques qui ressortiront au cours de la description qui va suivre et qui devront être considérées isolément ou selon toutes leurs combinaisons techniquement possibles.

L'invention sera mieux comprise et d'autres buts, détails, caractéristiques et avantages de celle-ci apparaîtront plus clairement au cours de la description d'un (des) mode(s) de réalisation particulier(s) de l'invention donné(s) uniquement à titre illustratif et non limitatif en référence aux dessins annexés. Sur ces dessins :

- la figure 1 représente schématiquement une vue en perspective d'un circuit optique intégré selon l'art antérieur ;
- la figure 2 représente schématiquement la répartition angulaire de la puissance lumineuse d'un faisceau optique non guidé dans un circuit optique intégré tel que celui de la figure 1 vu en coupe ;
- la figure 3 représente schématiquement une vue en perspective d'un circuit optique intégré comprenant une rainure centrale selon l'art antérieur ;
- la figure 4 représente schématiquement la propagation d'une partie du faisceau optique non guidé dans un circuit optique intégré ayant une rainure centrale sur la face inférieure selon l'art antérieur ;
- la figure 5 représente schématiquement une vue en coupe d'une jonction Y comprenant une rainure sur la face inférieure et une rainure sur la face supérieure selon l'art antérieur ;
- la figure 6 représente schématiquement une vue en coupe d'un circuit optique intégré comprenant une rainure centrale sur la face inférieure et un faisceau parasite de réflexion spéculaire sur la rainure centrale ;
- la figure 7 représente schématiquement une vue en coupe d'un circuit optique intégré comprenant une rainure centrale sur la face inférieure, une rainure centrale sur la face supérieure et des faisceaux parasites de réflexion spéculaire sur les deux rainures centrales ;
- la figure 8 représente schématiquement une vue en perspective d'un circuit optique intégré selon un premier mode de réalisation ;
- la figure 9 représente schématiquement une vue de dessus d'un circuit optique intégré selon le premier mode de réalisation ;
- la figure 10 représente schématiquement une vue en coupe d'un circuit optique intégré selon le premier mode de réalisation ;
- la figure 11A une vue de dessus d'un circuit optique intégré selon une variante du premier mode de réalisation ;
- la figure 11B représente un diagramme d'intensité normalisée diffractée par un bord d'écran en fonction d'une abscisse normalisée ;
- la figure 12 représente schématiquement une vue de dessus d'un circuit optique intégré à jonction Y selon une variante du premier mode de réalisation ;
- la figure 13 représente schématiquement une vue de dessus d'un circuit optique intégré à jonction Y selon un second mode de réalisation ;
- la figure 14A représente schématiquement une vue de dessus d'un circuit optique intégré selon une variante du premier mode de réalisation et la figure 14B une vue du côté de la face de sortie du circuit optique intégré de la figure 14A ;
- la figure 15 représente schématiquement une vue de dessus d'un circuit optique intégré selon un autre mode de réalisation ;
- la figure 16 représente schématiquement une vue en perspective d'un circuit optique intégré selon une variante du premier mode de réalisation.

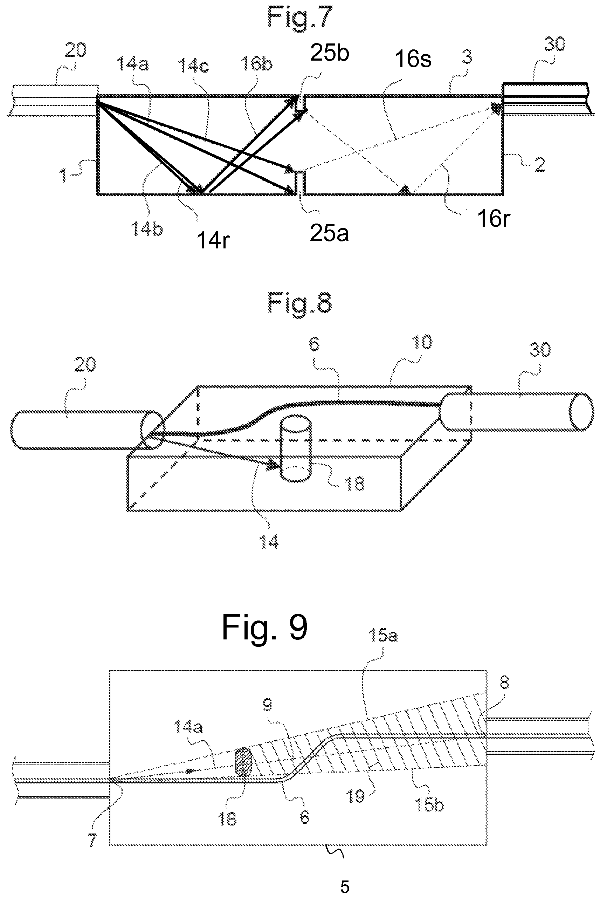

Une constatation faisant partie de la présente invention est que dans un circuit intégré comprenant une rainure centrale 25a, tel que représenté sur les figures 3 et 4, une fraction résiduelle de lumière parasite peut néanmoins être couplée optiquement entre une première extrémité 7 de guide d'onde sur la face d'entrée 1 et une seconde extrémité 8 de guide d'onde sur la face de sortie 2. En effet, une partie du faisceau de lumière non guidé 14s peut former un faisceau parasite par réflexion spéculaire 16s sur le fond de la rainure centrale 25a sur la face inférieure (cf. Figure 6). Une partie du faisceau non guidé 14s peut être réfléchie sur le fond d'une rainure 25a même lorsque cette rainure est doucie ou remplie d'un matériau absorbant. De même, dans le cas d'une jonction Y comprenant une rainure centrale 25a sur la face inférieure 4 et une rainure centrale 25b sur la face supérieure 3, une autre partie du faisceau de lumière non guidé 14r peut aussi former un faisceau parasite par réflexion spéculaire 16r sur le fond de la rainure centrale 25b sur la face supérieure du substrat en direction de la face de sortie du circuit optique intégré (cf. Figure 7). Du fait de la symétrie du dispositif par rapport à la rainure centrale, l'angle de la réflexion spéculaire sur le fond de la rainure centrale produit un faisceau réfléchi 16s et/ou 16r qui est dirigé vers la deuxième extrémité 8 du guide d'onde 6. Par symétrie, les faisceaux 16s et 16r sont ainsi couplés dans le coeur de la fibre optique de sortie 30. Il résulte de la présente analyse que la contribution de la lumière parasite par réflexion spéculaire sur le fond d'une rainure n'est nullement négligeable.

Partant de cette analyse, les figures 8 à 11A représentent schématiquement différentes vues d'un circuit optique intégré selon un premier mode de réalisation. Le circuit optique intégré comprend un substrat 10 comprenant une face d'entrée 1, une face de sortie 2, une face inférieure 4, une face supérieure 3, deux faces latérales 5 et un guide d'onde optique 6. Une première extrémité 7 du guide d'onde optique 6 se trouve sur la face d'entrée 1 du substrat et une deuxième extrémité 8 du guide d'onde optique 6 se trouve sur la face de sortie 2 du substrat 10. Le guide d'onde 6 du dispositif représenté sur les figures 8-11A a la particularité de ne pas être rectiligne. Autrement dit, le chemin optique du guide d'onde 6 ne suit pas une ligne droite entre la première extrémité 7 sur la face d'entrée 1 et la seconde extrémité 8 sur la face de sortie 2. Selon le mode de réalisation représenté sur les figures 8 à 11A, le chemin optique du guide d'onde 6 est constitué d'une ligne courbe continue située dans un plan parallèle à la surface supérieure 3. De préférence, les rayons des courbures du guide d'onde 6 sont les plus grands possibles afin de permettre un bon guidage du faisceau optique guidé 12 et de minimiser les pertes optiques. Selon d'autres modes de réalisation, le chemin optique du guide d'onde 6 peut être constitué de segments curvilignes et/ou de segments de droites reliés en série les uns aux autres.

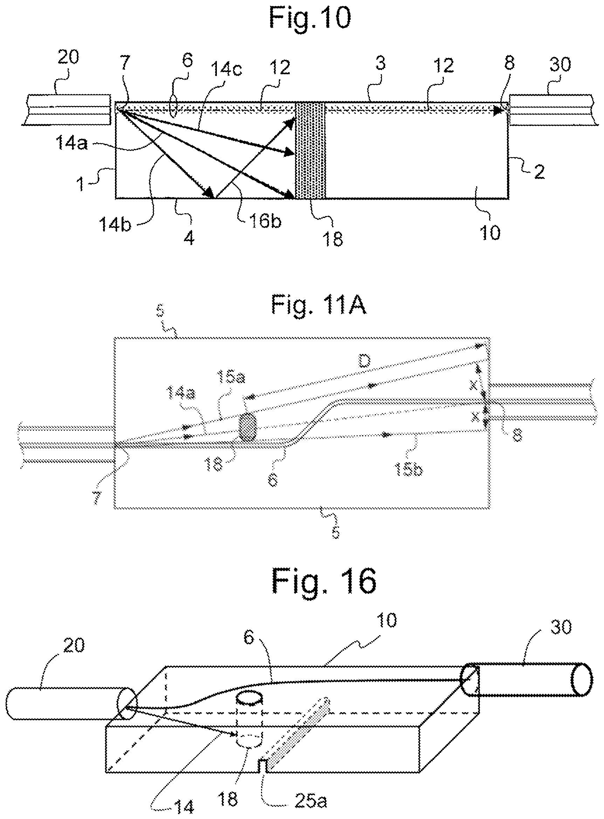

Le circuit intégré optique des figures 8 à 11A comprend aussi une zone d'atténuation 18. Comme il apparaît sur la figure 9, la zone d'atténuation 18 est située sur un segment de droite 9 joignant la première extrémité 7 du guide d'onde sur la face d'entrée 1 à la deuxième extrémité 8 du guide d'onde sur la face de sortie 2. On observe sur la figure 10 en coupe, que la zone d'atténuation 18 s'étend à l'intérieur du substrat depuis la face inférieure 4 du substrat jusque la face supérieure 3 du substrat. Dans l'exemple considéré, le guide d'onde 6 est situé juste en dessous de la face supérieure 3. Toutefois, l'étendue de la zone d'atténuation 18 est limitée latéralement de manière à ce qu'elle ne vienne pas couper le chemin optique du guide d'onde 6. La zone d'atténuation 18 n'atteint pas non plus les faces latérales 5 du substrat. Dit autrement, le chemin optique du guide d'onde 6 contourne la zone d'atténuation 18. Du fait que le chemin optique du guide d'onde 6 n'est pas rectiligne, la zone d'atténuation 18 ne coupe pas le chemin optique du faisceau optique guidé. Un faisceau optique guidé 12 suit donc le chemin optique du guide d'onde depuis la face d'entrée 1 jusque la face de sortie 2. Par contre, un faisceau optique non guidé 14, qui se dirige suivant un chemin optique rectiligne dans un plan contenant la première extrémité 7 du guide d'onde et la deuxième extrémité 8 du guide d'onde, ledit plan étant perpendiculaire à la face inférieure 4 du substrat, se trouve intercepté par la zone d'atténuation 18. Comme il apparaît sur la figure 10, la zone d'atténuation 18 intercepte non seulement la réflexion primaire 14a entre la première extrémité 7 et la deuxième extrémité 8, mais également toute la partie du faisceau non guidé qui est transmise 14c ou réfléchie 16b par réflexion interne multiple à l'intérieur du substrat entre la face supérieure 3 et la face inférieure 4 dans un plan passant par les deux extrémités 7 et 8. Plus généralement, la zone d'atténuation intercepte aussi les faisceaux parasites transmis via le substrat dans un secteur angulaire d'ombre 19 ayant pour sommet la première extrémité 7 du guide d'onde sur la face d'entrée 1 et ayant pour génératrices les droites 15a, 15b passant par la première extrémité 7 et tangentes à la zone d'atténuation 18 (cf. Figure 9).

Une zone d'atténuation unique 18 permet avantageusement d'intercepter non seulement la réflexion principale 14a, 16a au centre de la face inférieure du substrat, mais aussi toutes les réflexions internes multiples entre les deux extrémités du guide d'onde. Il n'est pas indispensable de ménager plusieurs zones d'atténuation pour supprimer les différentes réflexions internes.

La configuration de la zone d'atténuation 18, qui s'étend à l'intérieur du substrat de la face inférieure 4 jusque la face supérieure 3 du circuit optique intégré permet aussi d'atténuer les faisceaux optiques parasites qui se propagent dans le substrat avec un angle d'inclinaison très faible par rapport à la face supérieure 3. La zone d'atténuation 18 permet donc de bloquer une partie de lumière parasite qui serait réfléchie sur le fond d'une rainure de l'art antérieur. La zone d'atténuation 18 permet ainsi d'obtenir une amélioration du taux de réjection de lumière parasite non guidée dans un circuit optique intégré. Dans le cas d'un polariseur à échange protonique sur niobate de lithium, la zone d'atténuation 18 permet d'améliorer le taux de réjection en polarisation du polariseur et d'approcher la valeur théorique du taux d'extinction.

Selon un mode de réalisation préféré, la zone d'atténuation 18 est matérialisée par un trou traversant entre la face supérieure 3 et la face inférieure 4 du substrat 10. Selon le mode de réalisation représenté sur les figures 8 à 11A, la zone d'atténuation est de forme cylindrique et d'axe transverse au segment de droite 9 joignant la première extrémité 7 d'entrée à la deuxième extrémité 8 de sortie du guide d'onde 6. Avantageusement, la zone d'atténuation 18 cylindrique est de section circulaire ou oblongue. Avantageusement, la zone d'atténuation est située autour du point au milieu du segment de droite 9 joignant la première extrémité 7 à la seconde extrémité 8. De manière alternative, la zone d'atténuation 18 peut avoir une forme tronconique, ou encore parallélépipédique, ou encore tout autre forme géométrique ou non.

Avantageusement, un trou traversant 18 peut être rempli par un matériau absorbant optiquement ou opaque ou réfléchissant. Selon différentes alternatives, les parois de la zone d'atténuation 18 peuvent comporter un traitement de manière à modifier la diffusion, la diffraction, et/ou l'absorption de la lumière parasite 14 non guidée.

On constate que la zone de réflexion principale sur la face inférieure du substrat pour un couple donné de fibres entrée-sortie est quasi-ponctuelle, cette zone étant située sur le chemin direct entre l'entrée et la sortie et à mi-distance entre la fibre d'entrée 20 et la fibre de sortie 30. L'étendue spatiale de la zone d'atténuation 18 peut ainsi être limitée latéralement autour de cette zone centrale. Toutefois, des faisceaux de lumière parasite se propageant dans le substrat subissent une diffraction de Fresnel, dite de bord d'écran, sur les bords de la zone d'atténuation 18 et une partie de ces faisceaux diffractés esst susceptible d'être couplée dans la fibre de sortie 30.

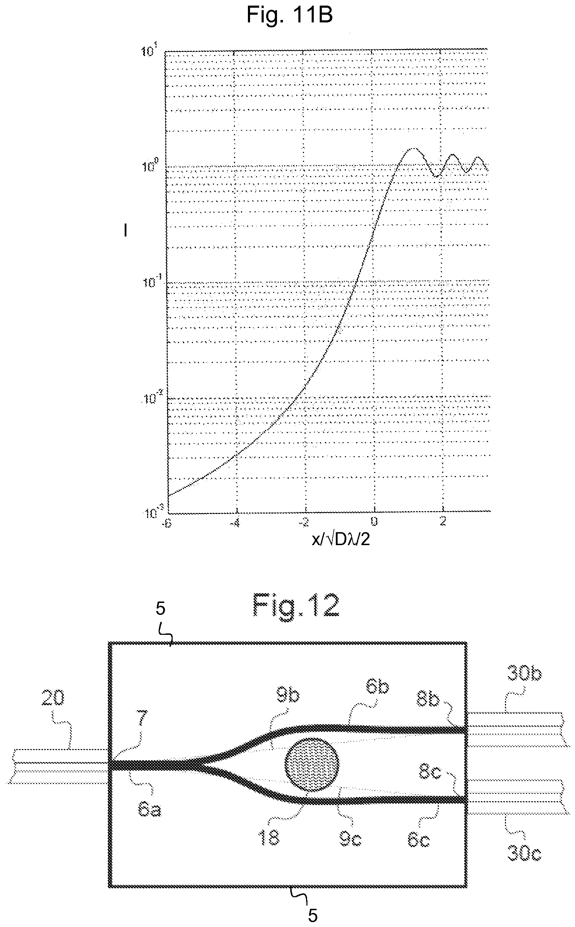

Les phénomènes de diffraction sur le bord d'une rainure ne sont généralement pas pris en compte dans les documents de l'état de la technique. Or, le cône d'ombre 19 comporte sur chacun de ses bords une zone de pénombre, où l'intensité de la lumière diffractée n'est pas négligeable. On observe que cette zone de pénombre est relativement étendue même lorsqu'on se place en champ proche, à faible distance du bord diffractant. La figure 11B représente un diagramme d'intensité normalisée diffractée par un bord d'écran en fonction d'une abscisse normalisée. On considère un écran s'étendant dans un demi-plan dont le bord est situé à une abscisse x= 0. Sur cette figure 11B, on représente l'intensité normalisée de la lumière diffractée par le bord d'écran à une distance D du plan de l'écran en fonction d'une abscisse normalisée. Une abscisse normalisée de 1 correspond à une distance $x = \sqrt{\dfrac{D\lambda}{2}}$. Plus précisément, on s'intéresse à l'intensité de la lumière diffractée dans la zone de pénombre (x < 0), en champ proche. On observe sur la figure 11B, que l'intensité normalisée décroît lentement dans la zone de pénombre. L'intensité normalisée reste supérieure à $10^{-2}$ pour une abscisse normalisée x égale à -2. La lumière diffractée sur le ou les bords d'une zone d'atténuation 18 ou d'une rainure s'apparente à une diffraction de bord d'écran en champ proche. L'intensité de la lumière diffractée génère de la lumière parasite à une distance D faible du bord sur lequel la lumière est diffractée.

Afin de limiter cet effet de diffraction parasite, les dimensions de la zone d'atténuation et sa position sur le segment de droite 9 joignant la première extrémité 7 de guide d'onde et la deuxième extrémité 8 de guide d'onde sont de préférence choisies comme suit. Etant définies les droites 15a et 15b tangentes respectivement à un bord de la zone d'atténuation et passant par la première extrémité 7 de guide d'onde sur la face d'entrée 1 (cf. Figure 11A). Notons x la plus petite distance entre la deuxième extrémité 8 de guide d'onde et la droite tangente 15a ou la droite tangente 15b. Notons D la distance entre un point tangent à la zone d'atténuation 18 et la face de sortie 2 le long de la droite tangente 15a ou 15b, la plus proche de l'extrémité 8. Autrement dit, D représente la distance entre ladite zone d'atténuation et le point d'intersection de la droite tangente 15a ou 15b sur la face de sortie 2. On détermine l'étendue spatiale de la zone d'atténuation dans une direction transverse au segment de droite 9 de manière à ce que la distance x soit supérieure ou égale à :

$$\sqrt{\frac{D\lambda}{2}}$$

où $\lambda$ représente la longueur d'onde dans le matériau dudit faisceau optique non guidé dans le substrat. De cette manière, l'onde diffractée par les bords de la zone d'atténuation 18 est suffisamment atténuée pour ne pas perturber le faisceau collecté au niveau de la deuxième extrémité 8. Comme représenté sur la figure 11A, le trou 18 peut avoir une forme ovale ou oblongue. Prenons le cas d'un substrat de niobate de lithium ayant une longueur L de 50 mm, où la zone d'atténuation 18 est placée au centre, D est égal à 25 mm. Pour un faisceau ayant une longueur d'onde dans le vide de 1,55 $\mu$m, l'indice de réfraction pour le faisceau non guidé dans le substrat est égal à 2,2 et la longueur d'onde $\lambda$ dans le matériau est égale à 0,7 $\mu$m. La distance minimum x est alors égale à 93 $\mu$m. Dans ce cas, les bords de la zone d'atténuation sont de préférence situés à au moins une cinquantaine de microns de la droite 9 joignant la première extrémité 7 et la deuxième extrémité 8 de guide d'onde afin de limiter les effets de la diffraction sur les bords de la zone d'atténuation.

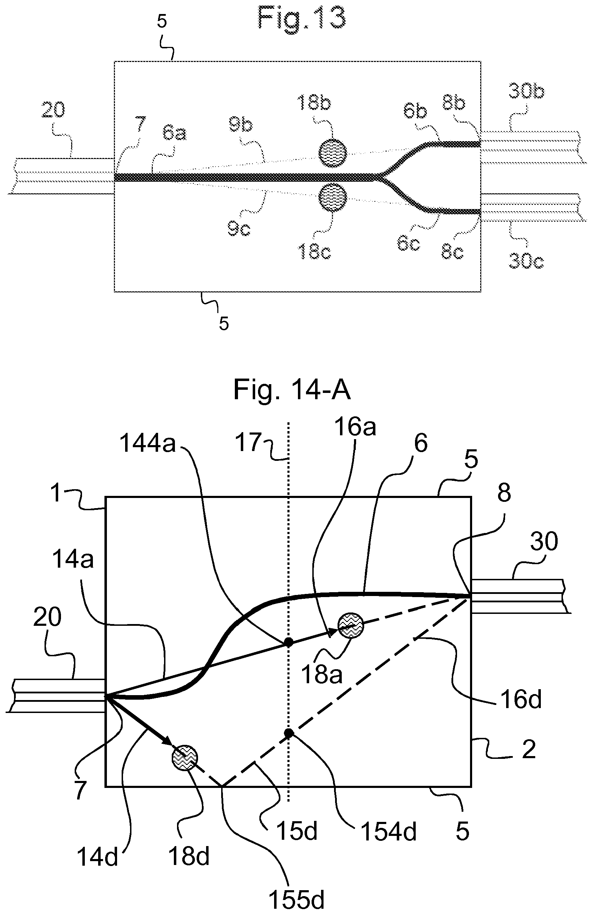

Les figures 12 et 13 représentent schématiquement en vue de dessus de divers modes de réalisation de circuits optiques intégrés du type jonction Y. Dans ces différents modes de réalisation, le guide d'onde optique comprend une branche commune 6a, une première branche secondaire 6b et une deuxième branche secondaire 6c. La branche commune 6a est reliée aux branches secondaires 6b, 6c par une jonction. Une première extrémité 7 de la branche commune 6a est située sur la face d'entrée 1 du substrat. Une deuxième extrémité 8b, respectivement 8c de chacune des branches secondaires 6b et 6c est située sur la face de sortie 2. Une fibre d'entrée 20 est disposée face à la première extrémité 7 de la branche commune 6a sur la face d'entrée 1. Une première fibre de sortie 30b est disposée face à la deuxième extrémité 8b de la première branche secondaire 6b sur la face de sortie 2 et une deuxième fibre de sortie 30c est disposée face à la deuxième extrémité 8c de la deuxième branche secondaire 6c sur la face de sortie 2. Les segments de droite 9a et 9b joignant respectivement la première extrémité 7 de la branche commune 6a du guide d'onde sur la face d'entrée 1 aux deuxièmes extrémités 8b, respectivement 8c des branches secondaires 6b, respectivement 6c sur la face de sortie 2 sont représentés sur les figures 12 et 13 par des lignes en pointillés 9b et 9c respectivement. Comme on peut l'observer sur la figure 12, les branches secondaires 6b, 6c s'écartent des segments de droite 9b et 9c.

Selon le mode de réalisation représenté sur la figure 12, le circuit optique intégré à jonction Y comprend une zone d'atténuation 18 unique. Comme dans le premier mode de réalisation, la zone d'atténuation 18 s'étend depuis la face inférieure 4 du substrat jusque la face supérieure 3 du substrat en dessous de laquelle est situé le guide d'onde 6a, 6b, 6c. Comme on peut l'observer sur la figure 12, la zone d'atténuation 18 s'étend transversalement à la fois sur le segment de droite 9b joignant l'extrémité 7 de la branche commune 6a sur la face d'entrée 1 à l'extrémité 8b de la première branche secondaire 6b sur la face de sortie 2 et sur le segment de droite 9c joignant l'extrémité 7 de la branche commune 6a sur la face d'entrée 1 à l'extrémité 8c de la deuxième branche secondaire 6c sur la face de sortie 2. Toutefois, la zone d'atténuation 18 ne coupe ni la branche commune 6a, ni la première branche secondaire 6b ni la deuxième branche secondaire 6c. Autrement dit, les deux branches secondaires 6b, 6c du guide d'onde contournent la zone d'atténuation 18. Avantageusement, la zone d'atténuation 18 de la figure 12 peut être réalisée au moyen d'un trou traversant, circulaire ou oblong, disposé entre les branches secondaires 6a et 6b de la jonction Y. De manière analogue au premier mode de réalisation, la zone d'atténuation peut être remplie d'un matériau optiquement absorbant, réfléchissant, diffractant et/ou diffusant.

En reprenant l'application nuémrique précédente pour un substrat de niobate de lithium ayant une longueur L de 50 mm, où la zone d'atténuation 18 est placée au centre, D est égal à 25 mm. Pour un faisceau ayant une longueur d'onde dans le vide de 1,55 $\mu$m, la distance minimum x est alors égale à 93 $\mu$m comme indiqué plus haut. Pour une distance entre les extrémités 8b et 8c de 800 $\mu$m et un trou 18 de dimension transverse égale à 700 $\mu$m, la zone de pénombre s'étend sur 300/93 soit une distance normalisée $x = -3.2 x \sqrt{\dfrac{D\lambda}{2}}$. Se reportant à la figure 11B, on en déduit une atténuation de l'ordre de . $5.10^{-3}$ ou de -23dB.

Selon un autre mode de réalisation représenté sur la figure 13, le circuit optique intégré à jonction Y comprend deux zones d'atténuation distinctes 18b et 18c. De manière analogue aux modes de réalisation précédents, les zones d'atténuation 18b et 18c s'étendent depuis la face supérieure 3 jusque la face inférieure 4 du substrat 10. Une première zone d'atténuation 18b est disposée sur le segment de droite 9b joignant l'extrémité 7 de la branche commune 6a sur la face d'entrée 1 à l'extrémité 8b de la première branche secondaire 6b sur la face de sortie 2. Une deuxième zone d'atténuation 18c est disposée sur le segment de droite 9c joignant la première extrémité 7 de la branche commune 6a sur la face d'entrée 1 à la deuxième extrémité 8c de la deuxième branche secondaire 6c sur la face de sortie 2. Les zones d'atténuation 18b et 18c peuvent être réalisées par des trous traversants éventuellement remplis d'un matériau absorbant. Contrairement au mode de réalisation décrit en lien avec la figure 12, selon le mode de réalisation de la figure 13 les zones d'atténuation 18b et 18c sont disposées à l'extérieur des branches secondaires 6b et 6c. On observe sur la figure 13 que les zones d'atténuation 18b et 18c sont disposées de part et d'autre de la branche commune 6a de la jonction Y.

Dans le cas d'un circuit optique intégré à plusieurs branches, telle qu'une jonction Y, l'emplacement le plus avantageux pour la ou les zones d'atténuation dépend de la longueur de la branche commune par rapport à la distance séparant la face d'entrée et la face de sortie, ainsi que de la distance de séparation entre les branches secondaires. L'emplacement optimal d'une zone d'atténuation dépend aussi bien sûr de la forme du chemin optique non rectiligne entre deux extrémités du guide d'onde.

La figure 16 illustre une variante du mode de réalisation de la figure 9, dans laquelle un COI comporte une zone d'atténuation 18 et, de manière complémentaire, une rainure centrale 25a sur la face inférieure du substrat. La zone d'atténuation 18 remplit les condition de la zone de pénombre indiquée ci-dessus. Ainsi la zone d'atténuation 18 a pour effet d'atténuer les réflexions internes parasites se propageant directement entre la première extrémité de guide d'onde 7 et la deuxième extrémité de guide d'onde 8 ainsi que d'éviter que la zone de pénombre correspondant à la lumière diffractée sur les bords de cette zone d'atténuation 18 n'atteigne la deuxième extrémité de guide d'onde 30. En complément de cette zone d'atténuation 18, la rainure centrale 25a permet d'atténuer encore les faisceaux parasites de pénombre résiduelle se propageant dans le substrat. Le complément d'atténuation des faisceaux parasites apporté par la rainure centrale 25a permet d'améliorer encore le taux d'extinction dans un polariseur à guide d'onde. La combinaison de ces éléments permet d'atteindre un taux de réjection d'environ -80 dB. D'autres rainures, par exemple sur la face supérieure 3, ou des rainures excentrées sur la face inférieure, peuvent encore compléter le COI pour améliorer la réjection de lumière parasite.L'homme du métier adaptera aisément le dispositif de l'invention à un circuit intégré optique comprenant plus d'une branche d'entrée et/ou plus de deux branches de sortie, tel qu'un coupleur 1 xN, un coupleur 2x2 ou un coupleur 3x3. Par exemple, dans le cas d'un coupleur ayant une branche commune d'entrée et N branches secondaires de sortie, on peut prévoir un nombre inférieur ou égal à N zones d'atténuations distinctes.

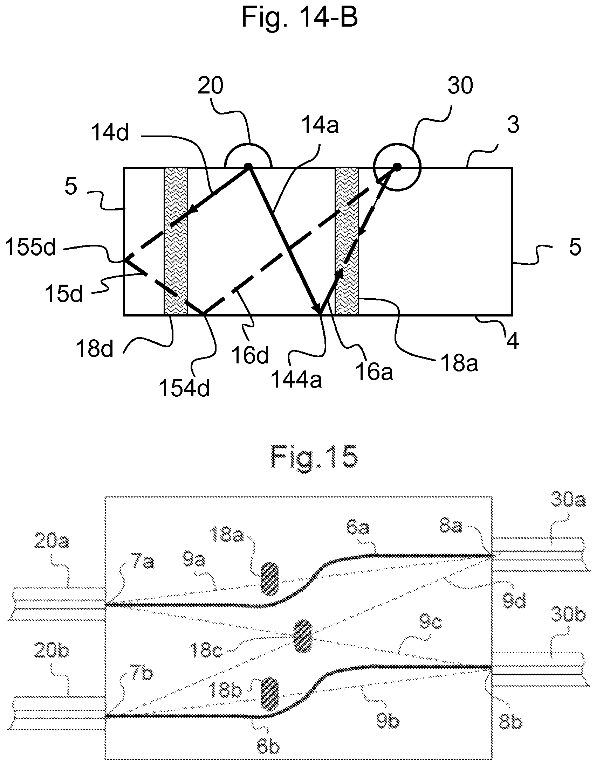

On a représenté un circuit optique intégré selon une variante du premier mode de réalisation en vue de dessus sur la figure 14A et en vue de côté sur la figure 14B (vue depuis la face de sortie 2). Le circuit optique intégré comprend un guide d'onde 6 non rectiligne, s'étendant entre une première extrémité 7 couplée à une fibre optique d'entrée 20 et une deuxième extrémité 8 couplée à une fibre optique de sortie 30. Le circuit optique intégré comprend une première zone d'atténuation 18a et une deuxième zone d'atténuation 18d. De manière analogue aux modes de réalisation précédents, les zones d'atténuation 18a et 18d s'étendent depuis la face supérieure 3 jusque la face inférieure 4 du substrat 10. La première zone d'atténuation 18a est disposée sur un segment de droite joignant la première extrémité 7 du guide d'onde sur la face d'entrée 1 à la deuxième extrémité 8 du guide d'onde sur la face de sortie 2. Le chemin optique du guide d'onde 6 contourne la première zone d'atténuation 18a. Un faisceau optique non guidé 14a se dirige suivant un chemin optique rectiligne dans un plan contenant la première extrémité 7 du guide d'onde et la deuxième extrémité 8 du guide d'onde. Le faisceau optique non guidé 14a se réfléchit par réflexion interne totale sur la face inférieure 4 du circuit optique intégré en un point 144a situé dans le plan médian 17 à mi-distance de la face d'entrée 1 et de la face de sortie 2. Le faisceau réfléchi 16a se propage dans un plan perpendiculaire à la face inférieure 4 et passant par les extrémités 7 et 8 du guide d'onde 6. Le faisceau réfléchi 16a est ainsi intercepté par la zone d'atténuation 18a. L'effet de la zone d'atténuation 18a est analogue à celui de la zone d'atténuation 18 de la figure 8. Les figures 14-A et 14-B représentent aussi un autre faisceau optique non guidé 14d issu de l'extrémité 7 du guide d'onde. Le faisceau non guidé 14d est susceptible d'atteindre la deuxième extrémité du guide d'onde après double réflexion sur une face latérale 5 du substrat et sur la face inférieure 4 du substrat. En effet, le faisceau non guidé 14d est incident sur une face latérale 5 en un point 155d et forme un premier faisceau réfléchi 15d. En l'absence de la zone d'atténuation 18d, le faisceau réfléchi 15d serait réfléchi sur la face inférieure au point 154d également situé dans le plan médian 17. Le faisceau doublement réfléchi 16d ainsi formé serait susceptible d'atteindre la deuxième extrémité 8 du guide d'onde 6. L'effet de la deuxième zone d'atténuation 18d est d'intercepter le faisceau 14d susceptible de former un faisceau parasite 16d par double réflexion sur les faces du substrat. Le circuit optique intégré des figures 14-A et 14-B permet non seulement d'atténuer un faisceau parasite 14a, 16a se propageant par simple réflexion sur la face inférieure du substrat mais permet également d'atténuer la lumière parasite 16d provenant d'une double réflexion interne sur une face latérale et sur la face inférieure du substrat.

L'invention s'applique également à un circuit optique intégré comprenant plusieurs guides d'onde indépendants. La figure 15 représente un circuit optique intégré comportant deux guides d'onde 6a et 6b indépendants. Chaque guide d'onde 6a, respectivement 6b, comprend une première extrémité 7a, respectivement 7b, sur la face d'entrée 1, et comprend une deuxième extrémité 8a, respectivement 8b, sur la face de sortie 2. Comme décrit en lien avec les précédents modes de réalisation, on aménage une première zone d'atténuation 18a sur le segment de droite 9a joignant la première extrémité 7a du premier guide d'onde 6a à la deuxième extrémité 8a du premier guide d'onde 6a. De même, on aménage une deuxième zone d'atténuation 18b sur le segment de droite 9b joignant la première extrémité 7b du deuxième guide d'onde 6b à la deuxième extrémité 8b du deuxième guide d'onde 6b. Afin d'éviter les couplages parasites entre le premier et le deuxième guide d'onde, on aménage en outre une autre zone d'atténuation 18c sur le segment de droite 9c joignant la première extrémité 7a du premier guide d'onde 6a à la deuxième extrémité 8b du deuxième guide d'onde 6b. Comme représenté sur la figure 15, la zone d'atténuation 18c est avantageusement située également sur le segment de droite 9d joignant la première extrémité 7b du deuxième guide d'onde 6b à la deuxième extrémité 8a du premier guide d'onde 6a. Ce mode de réalisation permet de réduire les couplages parasites (cross-coupling) entre les extrémités de différents guides d'onde disposés sur un même substrat. Ce schéma se généralise aisément à un circuit optique intégré comprenant plus de deux guides d'ondes ou comprenant différentes fonctions intégrés sur un même substrat telles que polariseur, modulateur de phase, interféromètre de Mach-Zehnder, jonction Y, coupleurs 2x2 ou encore coupleur 3x3.

Selon un aspect particulier, le substrat comprend en outre au moins une rainure ménagée sur une des faces latérales, inférieure ou supérieure du substrat.
L'invention s'applique avantageusement à un polariseur à échange protonique sur substrat de LiNbO$_3$.

L'invention peut être implémentée dès la fabrication d'un circuit optique intégré. La zone d'atténuation peut être créée dans le substrat avant ou après la fabrication du guide d'onde intégré, par des procédés de micro lithographie (masquage et gravure) ou par d'autres procédés physico-chimiques (usinage laser ou perçage aux ultrasons).

L'invention s'applique également à des circuits optiques intégrés existant. En effet, il est très facile de modifier un circuit optique intégré existant pour y former une ou plusieurs zones d'atténuation telles que définies selon la présente invention. Par exemple, on peut former un ou plusieurs trous traversants dans un circuit optique intégré, sans induire de perturbation au niveau d'un guide d'onde optique préexistant. Il est ainsi possible de réduire considérablement le taux de lumière parasite transmis via un circuit optique intégré de manière non guidée. Notamment, il est ainsi possible d'améliorer le taux de réjection d'un polariseur à échange protonique préexistant.

L'invention permet d'atténuer la propagation d'ondes optiques parasites non guidées via le substrat. La zone d'atténuation rend impossibles les réflexions directes entre la fibre d'entrée et la fibre de sortie. De plus, la zone d'atténuation ne risque pas de générer de nouveaux faisceaux parasites contrairement à une rainure, car la zone d'atténuation s'étend de manière continue depuis la face inférieure 4 jusque la face supérieure 3 du substrat.

Dans le cas d'un circuit intégré ayant un guide d'onde à une seule branche, l'invention permet, au moyen d'une seule zone d'atténuation, une meilleure atténuation de lumière parasite non guidée, comparé à un circuit optique intégré antérieur comportant une rainure centrale.

La mise en oeuvre de l'invention permet d'augmenter l'intégration sur un circuit optique intégré tout en réduisant les couplages parasites entre entrées et sortie d'un ou de plusieurs guides d'ondes optiques intégrés sur un même substrat planaire.

**Revendications**

1. Circuit optique intégré comprenant un substrat (10) optiquement transparent, ledit substrat (10) comprenant :

   - une face d'entrée (1), une face de sortie (2), deux faces latérales (5), une face inférieure (4) et une face supérieure (3), lesdites face inférieure (4) et face supérieure (3) s'étendant entre la face d'entrée (1) et la face de sortie (2), la face supérieure (3) étant plane et opposée à la face inférieure (4) ;
   - au moins un guide d'onde optique (6) situé dans un plan parallèle à la face supérieure (3),
   - au moins une première extrémité (7) de guide d'onde située sur la face d'entrée (1) du substrat (10) et au moins une seconde extrémité (8) de guide d'onde située sur la face de sortie (2) du substrat (10) ; et

   - au moins une zone d'atténuation optique (18, 18a, 18b, 18c, 18d) apte à atténuer un faisceau optique transmis via le substrat (10) de manière non guidée par ledit guide d'onde optique (6),
   - ledit au moins un guide d'onde (6) et ladite au moins une zone d'atténuation (18,18a,18b,18c,18d) ont des dimensions respectives telles que ladite au moins une zone d'atténuation (18, 18a, 18b, 18c, 18d) ne coupe pas ledit guide d'onde (6);
   - ledit au moins un guide d'onde (6) présente un chemin optique non rectiligne entre ladite au moins une première extrémité de guide d'onde et ladite au moins une seconde extrémité de guide d'onde ; **caractérisé en ce que**:
   - étant défini un segment de droite (9, 9b, 9c) entre ladite au moins une première extrémité (7) de guide d'onde et ladite au moins une seconde extrémité (8) de guide d'onde, ladite au moins une zone d'atténuation (18, 18a, 18b, 18c, 18d) s'étend à l'intérieur du substrat depuis la face inférieure (4) jusqu'à la face supérieure (3) du substrat (10), ladite au moins une zone d'atténuation étant positionnée sur ledit segment de droite (9, 9b, 9c) de manière à atténuer un faisceau optique non guidé transmis via le substrat (10) entre ladite première extrémité de guide d'onde et ladite seconde extrémité de guide d'onde, et **en ce que**
   - ladite au moins une zone d'atténuation a des dimensions telles qu'une droite (15a, 15b) passant par ladite première extrémité (7, 7a, 7b) de guide d'onde et tangente à ladite au moins une zone d'atténuation (18, 18a, 18b, 18c, 18d) a un point d'intersection avec la face de sortie (2) situé à une distance minimum x de ladite deuxième extrémité (8, 8a, 8b) de guide d'onde telle que ladite distance x est supérieure ou égale à :

$$\sqrt{\frac{D\lambda}{2}}$$

   - où *D* représente la distance entre ladite zone d'atténuation et ledit point d'intersection et $\lambda$ représente la longueur d'onde dans le matériau dudit faisceau optique non guidé.

2. Circuit optique intégré selon la revendication 1 dans lequel ladite au moins une zone d'atténuation optique (18, 18a, 18b, 18c, 18d) comprend au moins un trou traversant s'étendant de la face inférieure (4) jusqu'à la face supérieure (3) du substrat (10).

**3.** Circuit optique intégré selon la revendication 2 dans lequel ledit au moins un trou traversant (18, 18a, 18b, 18c, 18d) est rempli par un matériau optiquement absorbant ou opaque ou un matériau réfléchissant.

**4.** Circuit optique intégré selon l'une des revendications 1 à 3, dans lequel ladite au moins une zone d'atténuation (18, 18a, 18b, 18c, 18d) est positionnée au milieu dudit segment de droite (9, 9a, 9b, 9c) joignant une première extrémité du guide d'onde sur la face d'entrée (1) et une deuxième extrémité du guide d'onde sur la face de sortie (2).

**5.** Circuit optique intégré selon l'une des revendications 1 à 4, dans lequel ledit au moins un guide d'onde (6) est apte à guider un faisceau optique ayant un premier état de polarisation déterminé guidé et à transmettre dans le substrat un faisceau optique non guidé ayant un second état de polarisation.

**6.** Circuit optique intégré selon l'une des revendications 1 à 5 comportant en outre au moins une rainure (25a) sur la face inférieure du circuit optique intégré, une rainure (25b) sur la face supérieure du circuit optique intégré, et/ou une rainure sur une face latérale du circuit optique intégré.

**7.** Circuit optique intégré selon l'une des revendications 1 à 6 dans lequel ledit au moins un guide d'onde optique (6) comprend une branche commune (6a), une première branche secondaire (6b) et une deuxième branche secondaire (6c), la branche commune (6a) étant reliée par une jonction Y à la première branche secondaire (6b) et à la deuxième branche secondaire (6c), ladite au moins une zone d'atténuation (18, 18a, 18b, 18c, 18d) étant disposée sur un premier segment de droite (9b) joignant la première extrémité de la branche commune (6a) sur la face d'entrée (1) à la deuxième extrémité de la première branche secondaire (6b) sur la face de sortie (2) et/ou sur un deuxième segment de droite (9c) joignant la première extrémité de la branche commune (6a) sur la face d'entrée (1) à la deuxième extrémité de la deuxième branche secondaire (6c) sur la face de sortie (2).

**8.** Circuit optique intégré selon la revendication 7, ladite au moins une zone d'atténuation (18, 18a, 18b, 18c, 18d) comprenant au moins une première zone d'atténuation (18a, 18b) et au moins une deuxième zone d'atténuation (18c, 18d), ladite première zone d'atténuation (18a, 18b) étant disposée sur un premier segment de droite (9b) joignant la première extrémité (7) de la branche commune (6a) sur la face d'entrée (1) à la deuxième extrémité (8b) de la première branche secondaire (6b) sur la face de sortie (2) et ladite deuxième zone d'atténuation (18c, 18d) étant disposée sur un deuxième segment de droite (9c) joignant la première extrémité (7) de la branche commune (6a) sur la face d'entrée (1) à la deuxième extrémité (8b) de la deuxième branche secondaire (6c) sur la face de sortie (2).

**9.** Circuit optique intégré selon la revendication 8 dans lequel ladite première zone d'atténuation (18b) et ladite deuxième zone d'atténuation (18c) sont disposées respectivement de part et d'autre de la branche commune de la jonction Y.

**10.** Circuit optique intégré selon l'une des revendications 1 à 8, dans lequel ledit substrat (10) comprend N guides d'onde optiques (6), avec N entier supérieur ou égal à deux, ayant au moins N extrémités de guide d'onde sur la face d'entrée (1) et/ou au moins N extrémités de guide d'onde sur la face de sortie (2) et ladite au moins une zone d'atténuation comprenant au moins N zones d'atténuations distinctes, chaque zone d'atténuation distincte étant disposée sur un segment de droite joignant une extrémité de guide d'onde sur la face d'entrée et une extrémité de guide d'onde sur la face de sortie.

**11.** Circuit optique intégré selon l'une des revendications 1 à 10, dans lequel ledit substrat comprend au moins une zone d'atténuation supplémentaire (18d) s'étendant à l'intérieur du substrat depuis la face inférieure (4) jusqu'à la face supérieure (3) du substrat (10), ladite au moins une zone d'atténuation supplémentaire (18d) étant positionnée de manière à atténuer un faisceau optique non guidé suivant un chemin optique comprenant une réflexion sur une face latérale (5) et une réflexion sur la face inférieure (4) entre ladite première extrémité de guide d'onde et ladite seconde extrémité de guide d'onde.

**Patentansprüche**

**1.** Integrierte optische Schaltung mit einem optisch durchsichtigen Substrat (10), wobei das Substrat (10)

- eine Eingangsseite (1), eine Ausgangsseite (2), zwei seitliche Seiten (5), eine Unterseite (4) und eine Oberseite (3), wobei sich die Unterseite (4) und die Oberseite (3) zwischen der Eingangsseite (1) und der Ausgangsseite (2) erstrecken, wobei die Oberseite (3) eben und von der Unterseite (4) abgewandt ist,
- wenigstens einen in einer zur Oberseite (3) parallelen Ebene gelegenen optischen Wellenleiter (6),
- wenigstens ein auf der Eingangsseite (1) des Substrats (10) gelegenes erstes Ende (7) des Wellenleiters und wenigstens ein auf der Ausgangsseite (2) des Substrats (10) gelegenes zweites Ende (8) des Wellenleiters und
- wenigstens eine optische Abschwächungszone (18, 18a, 18b, 18c, 18d), die geeignet ist, einen in nicht durch den optischen Wellenleiter (6) geführter Weise durch das Substrat (10) übertragenen optischen Strahl abzuschwächen,

aufweist,

- wobei der besagte wenigstens eine Wellenleiter (6) und die besagte wenigstens eine Abschwächungszone (18, 18a, 18b, 18c, 18d) jeweilige Abmessungen derart aufweisen, daß die besagte wenigstens eine Abschwächungszone (18, 18a, 18b, 18c, 18d) den Wellenleiter (6) nicht schneidet,
- wobei der besagte wenigstens eine Wellenleiter (6) einen nicht geradlinigen optischen Weg zwischen dem besagten wenigstens einen ersten Ende des Wellenleiters und dem besagten wenigstens einen zweiten Ende des Wellenleiters aufweist,

**dadurch gekennzeichnet, daß**,

- während ein Geradenabschnitt (9a, 9b, 9c) zwischen dem besagten wenigstens einen ersten Ende (7) des Wellenleiters und dem besagten wenigstens einen zweiten Ende (8) des Wellenleiters definiert ist, sich die besagte wenigstens eine Abschwächungszone (18, 18a, 18b, 18c, 18d) innerhalb des Substrats von der unteren Seite (4) bis zur oberen Seite (3) des Substrats (10) erstreckt, wobei die besagte wenigstens eine Abschwächungszone auf dem besagten Geradenabschnitt (9a, 9b, 9c) derart positioniert ist, daß ein zwischen dem besagten wenigstens einen ersten Ende des Wellenleiters und dem besagten wenigstens einen zweiten Ende des Wellenleiters durch das Substrat (10) übertragener nicht geführter optischer Strahl abgeschwächt wird und daß
- die besagte wenigstens eine Abschwächungszone Abmessungen derart aufweist, daß eine durch das besagte erste Ende (7, 7a, 7b) des Wellenleiters gehende und an der besagten wenigstens einen Abschwächungszone (18, 18a, 18b, 18c, 18d) tangential anliegende Gerade (15a, 15b) mit der Ausgangsseite (2) einen in einem derartigen Mindestabstand x vom besagten zweiten Ende (8, 8a, 8b) des Wellenleiters liegenden Schnittpunkt hat, daß der besagte Abstand x größer als oder gleich

$$\sqrt{\frac{D\lambda}{2}}$$

ist,
- wobei D den Abstand zwischen der besagten Abschwächungszone und dem besagten Schnittpunkt darstellt und $\lambda$ die Wellenlänge des nicht geführten optischen Strahls im Material darstellt.

2. Integrierte optische Schaltung gemäß Anspruch 1, bei der die besagte wenigstens eine optische Abschwächungszone (18, 18a, 18b, 18c, 18d) wenigstens ein sich von der Unterseite (4) bis zur Oberseite (3) des Substrats (10) erstreckendes Durchgangsloch aufweist.

3. Integrierte optische Schaltung gemäß Anspruch 2, bei der das besagte wenigstens eine Durchgangsloch (18, 18a, 18b, 18c, 18d) mit einem optisch absorbierenden oder undurchsichtigen Material oder mit einem reflektierenden Material gefüllt ist.

4. Integrierte optische Schaltung gemäß einem der Ansprüche 1 bis 3, bei der die besagte wenigstens eine optische Abschwächungszone (18, 18a, 18b, 18c, 18d) in der Mitte des ein erstes Ende des Wellenleiters auf der Eingangsseite (1) mit einem zweiten Ende des Wellenleiters auf der Ausgangsseite (2) verbindenden Geradenabschnitts (9, 9a, 9b, 9c) positioniert ist.

5. Integrierte optische Schaltung gemäß einem der Ansprüche 1 bis 4, bei der der besagte wenigstens eine Wellenleiter (6) geeignet ist, einen optischen Strahl zu führen, der einen bestimmten geführten Polarisationszustand aufweist, und in das Substrat einen nicht geführten optischen Strahl, der einen zweiten Polarisationszustand aufweist, zu übertragen.

6. Integrierte optische Schaltung gemäß einem der Ansprüche 1 bis 5, die außerdem wenigstens eine Rille (25a) auf der Unterseite der integrierten optischen Schaltung, eine Rille (25b) auf der Oberseite der integrierten optischen Schaltung und/oder eine Rille auf einer seitlichen Seite der integrierten optischen Schaltung aufweist.

7. Integrierte optische Schaltung gemäß einem der Ansprüche 1 bis 6, bei der der besagte wenigstens eine optische Wellenleiter (6) einen gemeinsamen Zweig (6a), einen ersten sekundären Zweig (6b) und einen zweiten sekundären Zweig (6c) aufweist, wobei der gemeinsame Zweig (6a) durch eine Y-Verbindung mit dem ersten sekundären Zweig (6b) und dem zweiten sekundären Zweig (6c) verbunden ist, wobei die besagte wenigstens eine optische Abschwächungszone (18, 18a, 18b, 18c, 18d) auf einem ersten Geradenabschnitt (9b), der das erste Ende des gemeinsamen Zweigs (6a) auf der Eingangsseite (1) mit dem zweiten Ende des ersten sekundären Zweigs (6b) auf der Ausgangsseite (2) verbindet, und/oder auf einem zweiten Geradenabschnitt (9c), der das erste Ende des gemeinsamen Zweigs (6a) auf der Eingangsseite (1) mit dem zweiten Ende des zweiten sekundären Zweigs (6c) auf der Ausgangsseite (2) verbindet.

**8.** Integrierte optische Schaltung gemäß Anspruch 1, bei der die besagte wenigstens eine optische Abschwächungszone (18, 18a, 18b, 18c, 18d) wenigstens eine erste Abschwächungszone (18a, 18b) und wenigstens eine zweite Abschwächungszone (18c, 18d) aufweist, wobei die erste Abschwächungszone (18a, 18b) auf einem ersten Geradenabschnitt (9b) liegt, der das erste Ende (7) des gemeinsamen Zweigs (6a) auf der Eingangsseite (1) mit dem zweiten Ende (8b) des ersten sekundären Zweigs (6b) auf der Ausgangsseite (2) verbindet, und die zweite Abschwächungszone (18c, 18d) auf einem zweiten Geradenabschnitt (9c) liegt, der das erste Ende des gemeinsamen Zweigs (6a) auf der Eingangsseite (1) mit dem zweiten Ende des zweiten sekundären Zweigs (6c) auf der Ausgangsseite (2) verbindet.

**9.** Integrierte optische Schaltung gemäß Anspruch 8, bei der die erste Abschwächungszone (18b) und die zweite Abschwächungszone (18c) je auf einer Seite des gemeinsamen Zweigs der Y-Verbindung liegen.

**10.** Integrierte optische Schaltung gemäß einem der Ansprüche 1 bis 8, bei der das besagte Substrat (10) N optische Wellenleiter (6) aufweist, wobei N ganzzahlig und größer als oder gleich zwei ist, die wenigstens N Wellenleiterenden auf der Eingangsseite (1) und/oder wenigstens N Wellenleiterenden auf der Ausgangsseite (2) aufweisen, und wobei die besagte wenigstens eine Abschwächungszone wenigstens N einzelne Abschwächungszonen aufweist, wobei jede einzelne Abschwächungszone auf einem Geradenabschnitt angeordnet ist, der ein Wellenleiterende auf der Eingangsseite mit einem Wellenleiterende auf der Ausgangsseite verbindet.

**11.** Integrierte optische Schaltung gemäß einem der Ansprüche 1 bis 10, bei der das besagte Substrat wenigstens eine zusätzliche Abschwächungszone (18d) aufweist, die sich im Inneren des Substrats von der Unterseite (4) bis zur Oberseite (3) des Substrats (10) erstreckt, wobei die besagte wenigstens eine zusätzliche Abschwächungszone (18d) derart positioniert ist, daß ein nicht geführter optischer Strahl entlang eines optischen Weges, der eine Reflexion an einer seitlichen Seite (5) und eine Reflexion an der Unterseite (4) zwischen dem besagten ersten Wellenleiterende und dem zweiten Wellenleiterende aufweist, abgeschwächt wird.

**Claims**

**1.** An integrated optical circuit comprising an optically transparent substrate (10), said substrate (10) comprising:

     - an input face (1), an output face (2), two lateral faces (5), a lower face (4) and an upper face (3), said lower face (4) and upper face (3) extending between the input face (1) and the output face (2), the upper face (3) being planar and opposite to the lower face (4);
     - at least one optical waveguide (6) located in a plane parallel to the upper face (3),
     - at least one first waveguide end (7) located on the input face (1) of the substrate (10) and at least one second waveguide end (8) located on the output face (2) of the substrate (10); and
     - at least one optical attenuation zone (18, 18a, 18b, 18c, 18d) able to attenuate an optical beam transmitted via the substrate (10) in a non-guided manner by said optical waveguide (6),
     - said at least one waveguide (6) and said at least one attenuation zone (18, 18a, 18b, 18c, 18d) have respective dimensions such that said at least one attenuation zone (18, 18a, 18b, 18c, 18d) does not cut said waveguide (6);
     - said at least one waveguide (6) has a non-rectilinear optical path between said at least one first waveguide end and said at least one second waveguide end; **characterized in that**:
     - being defined a straight line segment (9, 9b, 9c) between said at least one first waveguide end (7) and said at least one second waveguide end (8), said at least one attenuation zone (18, 18a, 18b, 18c, 18d) extends inside the substrate from the lower face (4) to the upper face (3) of the substrate (10), said at least one attenuation zone being positioned on said straight line segment (9, 9b, 9c) so as to attenuate a non-guided optical beam transmitted via the substrate (10) between said first waveguide end and said second waveguide end, and **in that**
     - said at least one attenuation zone has such dimensions that a straight line (15a, 15b) passing through said first waveguide end (7, 7a, 7b) and tangent to said at least one attenuation zone (18, 18a, 18b, 18c, 18d) has a point of intersection with the output face (2) located at a minimum distance x from said second waveguide end (8, 8a, 8b), such that the distance x is higher than or equal to:

$$\sqrt{\frac{D\lambda}{2}}$$

where D is the distance between said attenuation zone and said point of intersection, and λ is the wavelength in the material of said non-guided optical beam.

2. The integrated optical circuit according to claim 1, wherein said at least one optical attenuation zone (18, 18a, 18b, 18c, 18d) comprises at least one through-hole extending from the lower face (4) to the upper face (3) of the substrate (10).

3. The integrated optical circuit according to claim 2, wherein said at least one through-hole (18, 18a, 18b, 18c, 18d) is filled with an optically absorbing or opaque material or a reflective material.

4. The integrated optical circuit according to any one of claims 1 to 3, wherein said at least one optical attenuation zone (18, 18a, 18b, 18c, 18d) is positioned in the middle of said straight line segment (9, 9a, 9b, 9c) joining a first waveguide end on the input face (1) of the integrated optical circuit and a second waveguide end on the output face of the integrated optical circuit (2).

5. The integrated optical circuit according to any one of claims 1 to 4, wherein said at least one waveguide (6) is able to guide an optical beam having a first, guided, determined state of polarization and to transmit in the substrate a non-guided optical beam having a second state of polarization.

6. The integrated optical circuit according to any one of claims 1 to 5, further including at least one groove (25a) on the lower face of the integrated optical circuit, one groove (25b) on the upper face of the integrated optical circuit, and/or one groove on the lateral face of the integrated optical circuit.

7. The integrated optical circuit according to any one of claims 1 to 6, wherein said at least one optical waveguide (6) comprises a common branch (6a), a first secondary branch (6b) and a second secondary branch (6c), the common branch (6a) being connected by a Y-junction to the first secondary branch (6b) and to the second secondary branch (6c), said at least one attenuation zone (18, 18a, 18b, 18c, 18d) being arranged on a first straight line segment (9b) joining the first end of the common branch (6a) on the input face (1) to the second end of the first secondary branch (6b) on the output face (2) and/or on a second straight line segment (9c) joining the first end of the common branch (6a) on the input face (1) to the second end of the second secondary branch (6c) on the output face (2).

8. The integrated optical circuit according to claim 7, said at least one attenuation zone (18, 18a, 18b, 18c, 18d) comprising at least one first attenuation zone (18a, 18b) and at least one second attenuation zone (18c, 18d), said first attenuation zone (18a, 18b) being arranged on a first straight line segment (9b) joining the first end (7) of the common branch (6a) on the input face (1) to the second end (8b) of the first secondary branch (6b) on the output face (2) and said second attenuation zone (18c, 18d) being arranged on a second straight line segment (9c) joining the first end (7) of the common branch (6a) on the input face (1) to the second end (8b) of the second secondary branch (6c) on the output face (2).

9. The integrated optical circuit according to claim 8, wherein said first attenuation zone (18b) and said second attenuation zone (18c) are arranged respectively on either side of the common branch of the Y-junction.

10. The integrated optical circuit according to any one of claims 1 to 8, wherein said substrate (10) comprise N optical waveguides (6), with N an integer higher than or equal to two, having at least N waveguide ends on the input face (1) and/or at least N waveguide ends on the output face (2) and said at least one attenuation zone comprises at least N distinct attenuation zones, each distinct attenuation zones being arranged on a straight line segment joining a waveguide end on the input face and a waveguide end on the output face.

11. The integrated optical circuit according to any one of claims 1 to 10, wherein said substrate comprises at least one additional attenuation zone (18d) extending inside the substrate from the lower face (4) to the upper face (3) of the substrate (10), said at least one additional attenuation zone (18d) being positioned in such a manner to attenuate a non-guided optical beam following an optical path comprising a reflection on a lateral face (5) and a reflection on the lower face (4) between said first waveguide end and said second waveguide end.

## Fig. 1
### ART ANTERIEUR

## Fig.2
### ART ANTERIEUR

## Fig.3
### ART ANTERIEUR

## Fig. 4
ART ANTERIEUR

## Fig. 5
ART ANTERIEUR

## Fig. 6

Fig.7

Fig.8

Fig. 9

## Fig.10

## Fig. 11A

## Fig. 16

## Fig. 11B

$$x/\sqrt{D\lambda/2}$$

## Fig.12

Fig.13

Fig. 14-A

## Fig. 14-B

## Fig.15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1111413 A
- US 7366372 B, Y, le brevet
- EP 1396741 A

**Littérature non-brevet citée dans la description**

- **H. LEFÈVRE.** The fiber optic gyroscope, Artech House. *Annex 3 Basics of Integrated Optics,* 1992, 273-284